# EUROPÄISCHE PATENTSCHRIFT

(11) **EP 1 163 425 B1**
(45) Veröffentlichungstag und Bekanntmachung des Hinweises auf die Patenterteilung: **27.08.2003**
(21) Anmeldenummer: 00908908.7
(22) Anmeldetag: 23.03.2000
(51) Int. Cl.: F01D 5/20, F01D 5/14

(54) **TURBINENSCHAUFEL**
TURBINE BLADE
AUBE DE TURBINE

(30) Priorität: 24.03.1999 DE 19913269
(43) Veröffentlichungstag der Anmeldung: 19.12.2001
(73) Patentinhaber: ABB Turbo Systems AG, 5401 Baden (CH)
(72) Erfinder: PHILLIPSEN, Bent, CH-5406 Baden-Rütihof (CH); MAMAEV, Boris, Moscow, 129224 (RU); RYABOV, Evgeny, Samara, 443112 (RU)
(74) Vertreter: ABB Patent Attorneys
(86) Internationale Anmeldenummer: CH0000172
(87) Internationale Veröffentlichungsnummer: WO00057029

(56) Entgegenhaltungen:
- GB-A- 2 050 530
- GB-A- 2 153 447
- OKAPUU Ü: "Aerodynamic Design of First Stage Turbines for Small Aero Engines" LECTURE SERIES 1987-07, 15. - 18. Juni 1987, XP002901080 (von Karman Institute for Fluid Dynamics); PRATT & WHITNEY, CA in der Anmeldung erwähnt

## Beschreibung

### Technisches Gebiet

Die Erfindung betrifft eine Turbinenschaufel mit einer im Spitzenbereich der Schaufel angeordneten, das Schaufelprofil überragenden Konsole, gemäss dem Oberbegriff des Anspruchs 1.

### Stand der Technik

Insbesondere bei kleineren Turbomaschinen können die im Spitzenbereich der Turbinenschaufeln, d.h. zwischen der Schaufelspitze und der Schaufelabdeckung, auftretenden Spaltverluste beträchtliche Ausmasse annehmen und so zu einem deutlichen Wirkungsgradverlust führen. Ursache für diese Spaltverluste ist die Druckdifferenz zwischen der Druckseite und der Saugseite im Spitzenbereich der Schaufel, wodurch ein Überströmen des Arbeitsfluids stattfindet. Dieses Überströmen kann durch Erhöhung der Reibungsverluste zwischen der Schaufelspitze und der Schaufelabdeckung reduziert werden, was zu einer Senkung der Spaltverluste und damit zu einer Steigerung des Wirkungsgrades führt.

Eine bekannte Massnahme, welche auf die Verringerung der Spaltverluste und auf die Erhöhung der Zuverlässigkeit der Turbinenschaufel abzielt, ist die Anordnung einer das Schaufelprofil seitlich überragenden Rippe oder Konsole (sogenanntes minishroud oder winglet) im Spitzenbereich der1 Schaufel (Ü. Okapuu, Vortrag "Aerodynamic design of first stage turbines for small aero engines", gehalten im Rahmen der Lecture Series 1987-07 des "von Karman Institute for Fluid Dynamics", zum Thema "Small High Pressure Ratio Turbines", vom 15.-18. Juni 1987, S. 1-4 und Fig. 1-4). Auch in GB-A-2 153 447 und in GB-A-2 050 530 sind Schaufelblätter mit sowohl auf die Saug- als auch auf die Druckseite überstehenden Konsolen offenbart. GB-A-2 050 530 zeigt zudem ein Schaufelblatt mit einer auf der Saugseite angeordneten Konsole welche auf allen Seiten vom Schaufelblatt überragt wird.

All diese Lösungen haben jedoch eine Vergrösserung sowohl der Eintritts- als auch der Austrittskeilwinkel der Schaufel und damit entsprechende Wirkungsgradverluste zur Folge.

### Darstellung der Erfindung

Die Erfindung versucht alle diese Nachteile zu vermeiden. Ihr liegt die Aufgabe zugrunde, eine weitere Wirkungsgradverbesserung bei einer Turbinenschaufel zu erreichen, welche mit einer im Spitzenbereich der Schaufel angeordneten, das Schaufelprofil überragenden Konsole ausgestattet ist.

Erfindungsgemäss wird dies dadurch erreicht, dass die Konsole auf der Druckseite der Schaufel und nur in einem Teilbereich eines definierten Oberflächenbereiches dieser Druckseite ausgebildet ist. Dabei stellt dieser definierte Oberflächenbereich den Bereich der Druckseite dar, welcher von einer sowohl im Bereich der Eintrittskante als auch im Bereich der Austrittskante an der Druckseite des Schaufelblattes anliegenden, gedachten Sehne eingeschlossenen ist.

Der die Konsole tragende Teilbereich der Druckseite ist zwischen zwei auf der Druckseite des Schaufelblattes liegenden Punkten und beabstandet von diesen ausgebildet, wobei der erste Punkt im Bereich der Eintrittskante und der zweite Punkt im Bereich der Austrittskante angeordnet ist und wobei die gedachte Sehne an beiden Punkten anliegt. Als besonders zweckmässig hat es sich erwiesen, zwischen dem ersten Punkt und der Konsole sowie zwischen dem zweiten Punkt und der Konsole einen Abstand a₁, a₂ auszubilden, welcher jeweils etwa einer Schaufeldicke d₁, d₂ im entsprechenden Bereich des Schaufelblattes entspricht.

Weil sich die Konsole somit nur über einen Teil der Druckseite erstreckt, können beide Keilwinkel des Schaufelblattes, d.h. der Eintritts- und der Austrittswinkel, klein gehalten werden. Durch die Wahl der definierten Abstände a₁, a₂, können die Keilwinkel weiter verringert werden. Daraus resultiert eine spitze Schaufelgeometrie, welche dafür sorgt, dass hohe Machzahlen im Eintrittskantenbereich und Totwassergebiete im Austrittskantenbereich des Schaufelblattes vermieden werden. Letztlich wird dadurch, bei weiterhin gewährleisteter Reduktion der Spaltverluste, eine weitere Verbesserung des Wirkungsgrades erreicht.

Ausgehend von der Eintrittskante weist die Konsole in einem Bereich von 30 bis 40 % der Sehnenlänge I des Schaufelblattes eine maximale Höhe hₘₐₓ über der Druckseite auf. Dabei nimmt die Höhe der Konsole sowohl in Richtung der Eintrittskante als auch in Richtung der Austrittskante des Schaufelblattes kontinuierlich ab. Die maximale Höhe hₘₐₓ der Konsole entspricht etwa einer Schaufeldicke d₃, wie sie in einem der Konsole benachbarten und von der Schaufelspitze abgewandten Bereich des Schaufelblattes ausgebildet ist. Femer ist es vorteilhaft, wenn die Konsole wellenförmig ausgebildet ist.

Es hat sich gezeigt, dass insbesondere bei einer solchen Ausbildung der Konsole eine optimale Strömungsführung erreicht werden kann.

### Kurze Beschreibung der Zeichnung

In der Zeichnung ist ein Ausführungsbeispiel der Erfindung anhand einer Laufschaufel der Abgasturbine eines Turboladers dargestellt.

Es zeigen:
- Fig. 1: eine druckseitige Seitenansicht der Laufschaufel;
- Fig. 2: einen Schnitt durch die Laufschaufel, entlang der Linie II-II in Fig. 1;
- Fig. 3: einen Schnitt durch die Laufschaufel, entlang der Linie III-III in Fig. 1.

Es sind nur die für das Verständnis der Erfindung wesentlichen Elemente gezeigt. Nicht dargestellt sind beispielsweise die weiteren Bauteile der Abgasturbine, einschliesslich der Schaufelabdeckung.

### Weg zur Ausführung der Erfindung

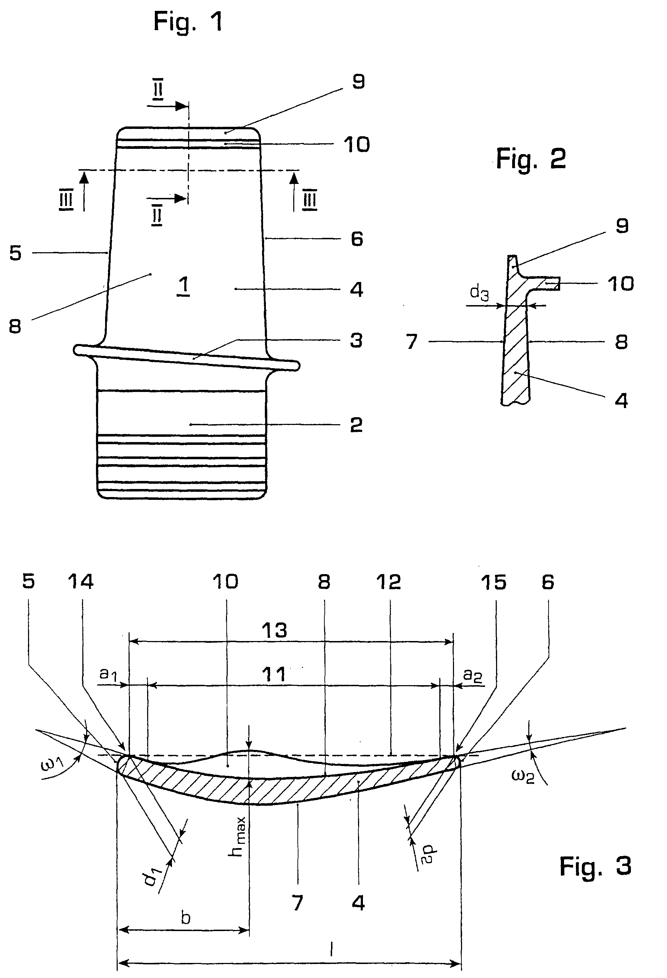

Die in Fig. 1 dargestellte, als Laufschaufel 1 ausgebildete Turbinenschaufel besteht aus einem Schaufelfuss 2, einer Plattform 3 und einem Schaufelblatt 4. Die Plattformen benachbarter Turbinenschaufeln des nicht dargestellten Turbinenrades liegen unmittelbar aneinander an und bilden so die innere Begrenzung des Strömungskanals, welcher nach aussen von einer ebenfalls nicht dargestellten Schaufelabdeckung abgeschlossen wird. Das Schaufelblatt 4 besitzt eine Eintrittskante 5, eine Austrittskante 6, eine Saugseite 7, eine Druckseite 8 sowie eine Schaufelspitze 9 (Fig. 2).

Im Bereich der Schaufelspitze 9 ist auf der Druckseite 8 des Schaufelblattes 4, eine Konsole 10 angeordnet, welche sich lediglich über einen Teilbereich 11 der gesamten Druckseite 8 erstreckt. Dieser Teilbereich 11 ist Bestandteil eines von einer gedachten Sehne 12 eingeschlossenen Oberflächenbereiches 13 der Druckseite 8. Dazu liegt die Sehne 12 im Bereich der Eintrittskante 5 des Schaufelblattes 4 an einem ersten Punkt 14 und im Bereich der Austrittskante 6 des Schaufelblattes 4 an einem zweiten Punkt 15 an. Der die Konsole 10 aufnehmende Teilbereich ist zwischen den beiden Punkten 14, 15 und beabstandet von diesen ausgebildet. Er ist somit kleiner als der von der Sehne 12 eingeschlossene Oberflächenbereich 13 (Fig. 3).

Zwischen dem ersten Punkt 14 und der Konsole 10 ist ein Abstand a₁ ausgebildet, welcher etwa der Schaufeldicke d₁ in diesem Bereich des Schaufelblattes 4 entspricht. Ebenso ist zwischen dem zweiten Punkt 15 und der Konsole 10 ein Abstand a₂ ausgebildet, der seinerseits etwa der Schaufeldicke d₂ in diesem Bereich des Schaufelblattes 4 entspricht.

Die Konsole 10 besitzt eine maximale Höhe hₘₐₓ über der Druckseite 8, welche etwa einer Schaufeldicke d₃ entspricht, welche in einem der Konsole 10 benachbarten, jedoch von der Schaufelspitze 9 abgewandten Bereich des Schaufelblattes 4 ausgebildet ist (Fig. 2). Diese maximale Höhe hₘₐₓ ist in einem Abstand b von der Eintrittskante 5 angeordnet, welcher bei 30 bis 40 % der Sehnenlänge l des Schaufelblattes 4 liegt (Fig. 3). Ausgehend von der maximale Höhe hₘₐₓ nimmt die Höhe der Konsole 10 sowohl in Richtung der Eintrittskante 5 als auch in Richtung der Austrittskante 6 des Schaufelblattes 4 kontinuierlich ab. Dabei wird die Höhe der Konsole 10 in beide Richtungen derart reduziert, dass über die Sehnenlänge I eine wellenförmige Aussenkontur entsteht.

Weil die Konsole 10 nur in einem Teilbereich 11 der Druckseite 8 ausgebildet und gegenüber den Anlagepunkten der Sehne 12 an der Druckseite 8 nach innen versetzt angeordnet ist und weil ihre Höhe in Richtung beider Schaufelkanten kontinuierlich abnimmt, können beide Keilwinkel der Turbinenschaufel 1, d.h. sowohl der Eintrittswinkel ω₁ als auch der Austrittswinkel ω₂, gegenüber den aus dem Stand der Technik bekannten Lösungen klein gehalten werden.

Im Betrieb verbessert diese spitze Schaufelgeometrie die Anströmung im Bereich der Eintrittskante 5 des Schaufelblattes 4 und reduziert somit die Machzahlen. Ebenfalls aufgrund der spitzen Schaufelgeometrie wird im Bereich der Austrittskante 6 des Schaufelblattes 4 das Entstehen von Totwassergebieten verhindert. Auf diese Weise lässt sich eine weitere Verbesserung des Wirkungsgrades erreichen, wobei die erforderliche Reduktion der Spaltverluste gewährleistet bleibt. Zudem kann durch die wellenförmige Aussenkontur der Konsole 10 eine optimale Strömungsführung erreicht werden.

Zusätzlich zur Konsole 10 auf der Druckseite 8 des Schaufelblattes 4 kann auch auf der Saugseite 7 eine Konsole angeordnet sein (nicht dargestellt), wodurch die Gefahr des Überströmens weiter verringert und bei entsprechender Ausbildung die Strömungsführung auch in diesem Bereich verbessert werden kann. Natürlich kann eine solche Konsole 10 nicht nur bei Laufschaufeln, sondern auch bei Leitschaufeln eingesetzt werden.

### Bezugszeichenliste

- 1: Turbinenschaufel, Laufschaufel
- 2: Schaufelfuss
- 3: Plattform
- 4: Schaufelblatt
- 5: Eintrittskante
- 6: Austrittskante
- 7: Saugseite
- 8: Druckseite
- 9: Schaufelspitze
- 10: Konsole
- 11: Teilbereich
- 12: Sehne
- 13: Oberflächenbereich
- 14: Punkt, erster
- 15: Punkt, zweiter

- a₁: Abstand
- a₂: Abstand
- b: Abstand
- d₁: Schaufeldicke, von 4
- d₂: Schaufeldicke, von 4
- d₃: Schaufeldicke, von 4
- hₘₐₓ: maximale Höhe, von 10
- l: Sehnenlänge, von 4
- ω₁: Eintrittswinkel, von 4
- ω₂: Austrittswinkel, von 4

## Patentansprüche

1. Turbinenschaufel mit einem Schaufelblatt (4), welches mit einer Eintrittskante (5), einer Austrittskante (6), einer Schaufelspitze (9), einer Saugseite (7) sowie einer Druckseite (8) ausgestattet ist, wobei auf einer Seite des Schaufelblattes (4) im Bereich der Schaufelspitze (9) eine Konsole (10) angeordnet ist, die sich mit Abstand zur Eintrittskante (5) und Austrittskante (6) zwischen diesen beiden über einen Teilbereich (11) der Oberfläche erstreckt, **dadurch gekennzeichnet, dass** die Konsole (10) in einem Oberflächenbereich (13) der Druckseite (8) des Schaufelblattes (4) angeordnet ist, und der Abstand (a₁) zwischen Konsole (10) und Eintrittskante (5) bzw. der Abstand (a₂) zwischen Konsole (10) und Austrittskante (6) mit Hilfe einer gedachten Sehne (12) definiert wird, welche im Bereich der Eintrittskante (5) an einem ersten Punkt (14) und im Bereich der Austrittskante (6) an einem zweiten Punkt (15) an der Druckseite (8) des Schaufelblattes (4) anliegt, wobei zwischen dem ersten Punkt (14) und der Konsole (10) sowie zwischen dem zweiten Punkt (15) und der Konsole jeweils ein Abstand (a₁, a₂) ausgebildet ist, welcher etwa einer Schaufeldicke (d₁, d₂) im entsprechenden Bereich des Schaufelblattes (4) entspricht.

2. Turbinenschaufel nach Anspruch 1, **dadurch gekennzeichnet, dass** die Konsole (10), ausgehend von der Eintrittskante (5), in einem Bereich von 30 bis 40 % der Sehnenlänge (I) des Schaufelblattes (4) eine maximale Höhe (hₘₐₓ) über der Druckseite (8) aufweist, wobei die Höhe der Konsole (10) sowohl in Richtung der Eintrittskante (5) als auch in Richtung der Austrittskante (6) des Schaufelblattes (4) kontinuierlich abnimmt.

3. Turbinenschaufel nach Anspruch 2, **dadurch gekennzeichnet, dass** die maximale Höhe (hₘₐₓ) der Konsole (10) etwa einer Schaufeldicke (d₃) entspricht, welche in einem der Konsole (10) benachbarten und von der Schaufelspitze (9) abgewandten Bereich des Schaufelblattes (4) ausgebildet ist.

4. Turbinenschaufel nach Anspruch 3, **dadurch gekennzeichnet, dass** die Konsole (10) wellenförmig ausgebildet ist.

## Claims

1. Turbine blade having a blade body (4) which is provided with a leading edge (5), a trailing edge (6),a blade tip (9) a suction side (7) and a pressure side (8), a bracket (10) being arranged on one side of the blade body (4) in the region of the blade tip (9),which bracket extends over a section (II) of the surface at a distance from and between the leading edge (5) and trailing edge (6), **characterized in that** the bracket (10) is arranged in a surface region (13) of the pressure side (8) of the blade body (4), and the distance (a₁) between the bracket (10) and leading edge (5), and the distance (a₂) between the bracket (10) and the trailing edge (6) is defined with the aid of an imaginary chord (12) which bears against a first point (14) on the pressure side (8) of the blade body (4) in the region of the leading edge (5) and against a second point (15) on the pressure side (8) of the blade body (4) in the region of the trailing edge (6), in each case a distance (a₁, a₂) being formed between the first point (14) and the bracket (10) and between the second point (15) and the bracket, and this distance (a₁, a₂) corresponds approximately to a blade thickness (d₁, d₂) in the corresponding region of the blade body (4)

2. Turbine blade according to Claim 1, **characterized in that** the bracket (10), starting from the leading edge (5), has a maximum height (hₘₐₓ) above the pressure side (8) in a region of 30 to 40% of the chord length (1) of the blade body (4), the height of the bracket (10) continuously decreasing both in the direction of the leading edge (5) and in the direction of the trailing edge (6) of the blade body (4).

3. Turbine blade according to Claim 2, **characterized in that** the maximum height (hₘₐₓ) of the bracket (10) corresponds approximately to a blade thickness (d₃) which is formed in a region of the blade body (4) which is adjacent to the bracket (10) and remote from the blade tip (9).

4. Turbine blade according to Claim 3, **characterized in that** the bracket (10) is of wavelike design.

## Revendications

1. Aube de turbine avec un corps d'aube (4), lequel comporte un bord d'attaque (5), un bord de fuite (6), une tête d'aube (9), un extrados (7) ainsi qu'un intrados (8), où une console (10) est disposée sur un côté du corps d'aube (4) dans la zone de tête d'aube (9), cette console s'étendant à distance du bord d'attaque (5) et du bord de fuite (6) et, entre ces deux bords, sur une zone partielle (11) de la surface, **caractérisée en ce que** la console (10) est disposée sur une zone de surface (13) de l'intrados (8) du corps d'aube (4) et **en ce que** la distance (a₁) entre la console (10) et le bord d'attaque (5) ou la distance (a₂) entre la console (10) et le bord de fuite (6) est définie à l'aide d'une corde imaginaire (12), laquelle est adjacente, sur l'intrados (8) du corps d'aube (4), à un premier point (14) dans la zone du bord d'attaque (5) et à un deuxième point (15) dans la zone du bord de fuite (6), de sorte qu'une distance (a₁, a₂) est à chaque fois formée entre le premier point (14) et la console (10) ainsi qu'entre le deuxième point (15) et la console, laquelle distance correspondant environ à une épaisseur d'aube (d₁, d₂) dans la zone correspondante du corps d'aube (4).

2. Aube de turbine selon la revendication 1, **caractérisée en ce que** la console (10), à partir du bord d'attaque (5), dans une zone de 30 à 40% de la longueur de corde (1) du corps d'aube (4), présente une hauteur maximale (hₘₐₓ) au-dessus de l'intrados (8), la hauteur de la console (10) décroissant de manière continue tant dans la direction du bord d'attaque (5) que dans la direction du bord de fuite (6) du corps d'aube (4).

3. Aube de turbine selon la revendication 2, **caractérisée en ce que** la hauteur maximale (hₘₐₓ) de la console (10) correspond environ à une épaisseur d'aube (d₃), laquelle hauteur est formée dans une zone du corps d'aube (4) voisine de la console (10) et à l'écart de la tête d'aube (9).

4. Aube de turbine selon la revendication 3, **caractérisée en ce que** la console (10) est réalisée selon une forme ondulée.
